# EUROPÄISCHE PATENTSCHRIFT

(11) **EP 1 800 787 B1**
(45) Veröffentlichungstag und Bekanntmachung des Hinweises auf die Patenterteilung: **02.12.2009**
(21) Anmeldenummer: 05027974.4
(22) Anmeldetag: 20.12.2005
(51) Int. Cl.: B23K 9/23, F01D 5/02, B23K 20/227, B23K 20/24, B23K 20/12, B23K 101/00

(54) **Verfahren zur Herstellung einer stoffschlüssigen Verbindung zwischen zwei metallischen Wellenstücken einer Welle, insbesondere einer Dampfturbinenwelle**
Method of joining two metallic parts of a shaft by welding or brazing, in particular of a steam turbine shaft
Procédé pour joindre par brasage ou soudage deux pièces metalliques constituant un arbre, notamment un arbre d'une turbine à vapeur

(43) Veröffentlichungstag der Anmeldung: 27.06.2007
(73) Patentinhaber: SIEMENS AKTIENGESELLSCHAFT, 80333 München (DE)
(72) Erfinder: Richter, Christoph, Dr., 40470 Düsseldorf (DE)

(56) Entgegenhaltungen:
- EP-A- 1 577 494
- DE-A1- 10 019 783
- DE-C1- 10 138 239
- PATENT ABSTRACTS OF JAPAN Bd. 004, Nr. 084 (M-016), 17. Juni 1980 (1980-06-17) & JP 55 042148 A (MITSUBISHI HEAVY IND LTD), 25. März 1980 (1980-03-25)

## Beschreibung

Die Erfindung betrifft ein Verfahren zur Herstellung einer stoffschlüssigen Verbindung zwischen zwei metallischen Wellenstücken einer Welle, wobei ein erstes Wellenstück einen höheren Wärmeausdehnungskoeffizient und ein zweites Wellenstück einen niedrigeren Wärmeausdehnungskoeffizient aufweist wobei mindestens eines der Wellenstücke (2, 4) während der Ausbildung der stoffschlüssigen Verbindung (8) einer Wärmebehandlung unterzogen wird, derart, dass im Verbindungsbereich in einem kalten Zustand der Welle (6) thermische Spannungen eingestellt werden, die bei einer Erwärmung der Welle (6) reduziert werden.

Dampfturbinenwellen, welche im Betrieb einer Temperatur von bis zu ca. 700° ausgesetzt werden, erfordern einen besonders korrosionsbeständigen und hitzebeständigen Werkstoff. Weiterhin wird eine Verwendung von preiswerten Werkstoffen gangestrebt. Üblicherweise werden Dampfturbinenwellen aus einem Stahl mit einem Chromgehalt von etwa 10% gefertigt. Zur Verbesserung der Hitzebeständigkeit des Wellenmaterials werden Legierungen auf Nickelbasis eingesetzt. Allerdings sind Nickelbasis-Werkstoffe etwa 10-fach teuerer als der 10%-Chrom-Stahl, so dass sie trotz ihrer besseren Eigenschaften nicht in großen Mengen verwendet werden. Aus diesem Grund dienen Nickelbasis-Werkstoffe lediglich zur Ausbildung der besonders stark thermisch beanspruchten Stellen der Welle, wie z.B. im Einströmbereich des Frischdampfes.

Bei einer derart zwei- oder mehrteilig ausgebildeten Dampfturbinenwelle dehnen sich die aus unterschiedlichen Werkstoffen bestehenden Wellenstücke wegen der unterschiedlichen Wärmeausdehnungskoeffizienten unterschiedlich radial aus, wenn sie einer Temperaturänderung, wie z.B. beim Anfahren der Dampfturbine, ausgesetzt werden. Das Wellenstück auf Nickelbasis dehnt sich stärker aus als das 10%-Chrom-Wellenstück, so dass der Verbindungsbereich zwischen beiden Wellenstücken stark beansprucht ist. Um die Belastung des Verbindungsbereichs gering zu halten, wird dieser üblicherweise in einem kalten Bereich angeordnet, in dem sich im Betrieb eine Temperatur unter ca. 550°C einstellt. Der Verbindungsbereich ist im Betrieb beispielsweise lediglich einer Temperatur von etwa 500°C ausgesetzt ist. Dies erfordert, dass das Nickelbasis-Wellenstück relativ lang ausgestaltet werden muss, was mit erhöhten Kosten verbunden ist.

Aus der DE 196 28 506 A1 geht eine Dampfturbinenwelle mit zwei entlang einer Rotationsachse aneinandergereihten Wellenstücken gemäß dem Oberbegriff des Anspruchs 1 hervor. Das erste Wellenstück weist einen größeren Radius als das zweite Wellenstück auf. Das erste Wellenstück ist aus einem warmfesten Grundwerkstoff mit einem Chromgehalt von 10% bis 12% und einem Nickelgehalt von 0,2% bis 0,6% ausgebildet und eignet sich für den Einsatz bei Temperaturen über 550°C. Der Grundwerkstoff des zweiten Wellenstücks weist einen Chromanteil von etwa 9,8% und einen Nickelanteil von etwa 1,3% auf und wird insbesondere bei Temperaturbelastungen von 350°C bis etwa 550°C eingesetzt. Die zwei Bereiche sind durch Abschmelzen unterschiedlich legierter Elektroden nach dem Elektro-Schlacke-Umschmelz-Verfahren (ESU-Verfahren) miteinander verbunden.

In der EP 1 577 494 A1 wird eine geschweißte Welle offenbart, die aus zumindest drei Teilwellen aufgebaut ist, wobei der mittlere Bereich aus einem hochwarmfesteren Material als die beiden äußeren Bereiche hergestellt ist.

Der vorliegenden Erfindung liegt die Aufgabe zugrunde, ein Verfahren zur Herstellung einer stoffschlüssigen Verbindung zwischen zwei metallischen Wellenstücken einer Welle anzugeben, so dass diese Welle besonders kostengünstig ist und für den Einsatz bei hohen thermischen Belastungen geeignet ist.

Die Aufgabe wird erfindungsgemäß gelöst durch ein Verfahren zur Herstellung einer stoffschlüssigen Verbindung zwischen zwei metallischen Wellenstücken einer Welle, insbesondere einer Dampfturbinenwelle, wobei ein erstes Wellenstück einen höheren Wärmeausdehnungskoeffizient und ein zweites Wellenstück einen niedrigeren Wärmeausdehnungskoeffizient aufweist, und wobei mindestens eines der Wellenstücke während der Ausbildung der stoffschlüssigen Verbindung einer Wärmebehandlung unterzogen wird, derart, dass im Verbindungsbereich in einem kalten Zustand der Welle thermische Spannungen eingestellt werden, die bei einer Erwärmung der Welle reduziert werden, wobei das erste Wellenstück hierbei mit einem kleineren Außendurchmesser als das zweite Wellenstück gefertigt ist, wobei während der Wärmebehandlung sein Außendurchmesser an den Außendurchmesser des zweiten Wellenstücks zumindest angenähert und bevorzugt angeglichen wird, so dass während der Ausbildung der stoffschlüssigen Verbindung die Außendurchmesser gleich sind.

Aufgrund der unterschiedlichen Wärmeausdehnungskoeffizienten dehnen sich die zwei Wellenstücke im Betrieb der Welle unterschiedlich radial aus. Dadurch entstehen an der Seite des ersten Wellenstücks Druckspannung und an der Seite des zweiten Wellenstücks Zugspannungen. Diese Spannungen beanspruchen bei den bisher bekannten Wellen stark die Verbindung und beeinträchtigen ihre Beständigkeit.

Dieses Problem ist bei dem vorliegenden Verfahren dadurch behoben, dass in der Welle in einem kalten Zustand bei Umgebungstemperatur beide Seiten der Verbindung mit unterschiedlichen Vorspannungen beansprucht sind. Diese Vorspannungen sind mittels der Wärmebehandlung derart eingestellt, dass sie bei einer vorgegebenen Betriebstemperatur der Welle zumindest reduziert werden. In der Seite mit dem höheren Wärmeausdehnungskoeffizient sind Zugspannungen und in der Seite mit dem niedrigeren Wärmeausdehnungskoeffizient sind Druckspannungen erzeugt. Im Betrieb wird die Seite des ersten Wellenstücks durch die stärkere Ausdehnung des Werkstoffes auf Druck beansprucht, so dass die ursprünglich induzierten Zugspannungen im Material zumindest teilweise abgebaut werden. Analog werden die bei Umgebungstemperatur an der Seite des zweiten Wellenstücks wirkenden Druckspannungen im Betrieb der Welle aufgrund der Zugbeanspruchung dieser Seite ebenfalls abgebaut.

Die Wärmebehandlung erfolgt beim Erreichen eines definierten Temperaturniveaus unter der Schmelztemperatur des Wellenstücks, so dass sich seine Form und Struktur nicht verändern. Dabei kann die stoffschlüssige Verbindung unmittelbarer nach dem Erreichen dieses Temperaturniveaus hergestellt werden, so dass die Wärmebehandlung und das Zusammenfügen in einem Verfahrensschritt zusammengefasst werden. Wenn das Verbinden der Wellenstücke nicht unmittelbar nach der Wärmebehandlung erfolgen kann, kann das definierte Temperaturniveau zunächst überschritten und erst dann die Wärmebehandlung eingestellt werden. In der nachfolgenden Zeit geht die Temperatur des Wellenstücks zurück zur Umgebungstemperatur, wobei in einem Zeitpunkt das erwünschte Temperaturniveau wieder erreicht wird.

Dank der verbesserten Eigenschaften der hierbei hergestellten Verbindung kann der Verbindungsbereich auch zu einem warmen Bereich verschoben werden, in dem im Betrieb insbesondere Temperaturen über 550°C herrschen. Dies wiederum führt zu einer Reduzierung der Länge des Wellenstücks bestehend aus dem teueren, hitzebeständigeren Werkstoff, so dass die Anfertigung einer solchen Welle besonders kostengünstig ist.

Durch die Auswahl der unterschiedlichen Werkstoffe der Wellenstücke ist eine selektive Einstellung der Materialeigenschaften, wie z.B. der Wärmebeständigkeit und der Zähigkeit, in den unterschiedlichen Teilen der Welle gegeben. Somit eignet sich die Welle bestens für den Einsatz bei hohen thermischen Belastungen mit einem in einer axialen Richtung abnehmenden Temperaturverlauf. Dabei wird der thermischen Belastung im warmen Bereich durch den Einsatz eines besonders hitzebeständigen Werkstoffes entgegengewirkt, insbesondere durch einen Werkstoff, der einer Temperatur bis etwa 700° standhält. Im übrigen kalten Bereich der Welle wird ein zweiter Werkstoff eingesetzt, der weniger hitzebeständig ist, dafür aber deutlich kostengünstiger ist.

Gemäß einer bevorzugten Ausführungsform bestehen in einem kalten Zustand der Welle im Verbindungsbereich zwischen den beiden Wellenstücken thermische Spannungen, die infolge der Wärmebehandlung derart eingestellt werden, dass sie bei einer vorgegebenen Betriebstemperatur der Welle zumindest weitgehend aufgehoben sind. Somit ist der Verbindungsbereich bei Betriebstemperatur bis auf einen Toleranzwert frei von Spannungen.

Gemäß einer alternativen bevorzugten Ausführungsform bestehen in einem kalten Zustand der Welle im Verbindungsbereich zwischen den beiden Wellenstücken thermische Spannungen, die infolge der Wärmebehandlung derart eingestellt werden, dass das zweite Wellenstück bei einer vorgegebenen Betriebstemperatur der Welle einer definierten Druckspannung ausgesetzt sind. Dies hat den Vorteil, dass Druckspannungen die mechanische Beanspruchbarkeit erhöhen können.

Bevorzugt wird das erste Wellenstück während der Wärmebehandlung erwärmt. Somit dehnt sich das Wellenstück beim Erreichen eines bestimmten Temperaturniveaus aus und in diesem Zustand wird es mit dem zweiten Wellenstück stoffschlüssig verbunden. Beim Verbinden der zwei Wellenstücke treten im gekühlten Zustand bei Umgebungstemperatur angrenzenden an den Verbindungsbereich die Vorspannungen auf, welche im Betrieb aufgehoben werden.

Einen guten Effekt der Wärmebehandlung wird vorzugsweise dadurch erreicht, dass das zweite Wellenstück während der Wärmebehandlung abgekühlt wird und in diesem Zustand mit dem ersten Wellenstück verbunden wird. Somit werden nach der Ausbildung der Verbindung an der Seite des ersten Wellenstücks Zugspannungen induziert, welche entsprechende Druckspannungen an der Seite des zweiten Wellenstücks nach sich ziehen.

Nach einer bevorzugten Variante werden beide Wellenstücke zur Ausbildung der stoffschlüssigen Verbindung zusammengeschweißt. Eine Schweißverbindung weist eine sehr hohe Festigkeit auf und kann im Vergleich mit den anderen Arten stoffschlüssiger Verbindungen wie z.B. Löten und Kleben höhere thermische Belastungen aushalten.

Während der Wärmebehandlung wird dem ersten Wellenstück Wärme zugeführt und es dehnt sich radial aus. Optional kann das zweite Wellenstück gekühlt werden. Wenn die Außendurchmesser der zwei Wellenstücke sich entsprechen, werden die zwei Wellenstücke zusammengefügt und die Vorspannungen treten beim Abkühlen auf. Hierbei weist die Außenfläche der Welle auf beiden Seiten des Verbindungsbereichs auch im gekühlten Zustand den gleichen Durchmesser auf, so dass keine zusätzlichen mechanischen Belastungen der rotierenden Welle aufgrund unterschiedlicher Wellendurchmesser verursacht werden.

Zweckdienlicherweise wird der Außendurchmesser des ersten Wellenstücks während der Wärmebehandlung etwa 0,05% bis etwa 0,3% vergrößert.

Gemäß einer bevorzugten Ausgestaltung ist die Welle für einen Einsatz vorgesehen, bei dem sich im Betrieb über ihre Länge ein Temperaturprofil im Bereich zwischen 400°C und 700°C einstellt und der Verbindungsbereich zwischen dem ersten Wellenstück und dem zweiten Wellenstück an einem Ort ausgebildet ist, an dem sich im Betrieb eine Temperatur von etwa 600° einstellt. Dank der höheren Belastbarkeit der Verbindung zwischen den beiden Wellenstücken kann nun diese Verbindung in einen Bereich höherer Temperatur gelegt werden, wobei weiterhin ein einwandfreier Betrieb der Welle dauerhaft gewährleistet ist. Durch die Verschiebung des Verbindungsbereichs zu einem thermisch höher beanspruchten Wellenbereich ist das erste Wellenstück kürzer ausgebildet, was durch eine erhöhte Länge des zweiten Wellenstücks kompensiert ist. Wegen des Kostenunterschieds zwischen dem ersten und dem zweiten Werkstoff führt dies zu deutlich geringeren Kosten.

Die Erläuterung der Erfindung erfolgt anhand der in der Zeichnung dargestellten bevorzugten Ausführungsbeispiele. Es zeigen hierbei schematisch und vereinfacht:
- FIG 1: zwei Wellenstücke einer Welle vor der Ausbildung einer stoffschlüssigen Verbindung,
- FIG 2: ein Zustand während der Ausbildung einer Schweißverbindung der beiden Wellenstücke während einer Wärmebehandlung,
- FIG 3: eine Darstellung der Verteilung der erzeugten Vorspannungen in der Welle in einem abgekühlten Zustand nach dem Zusammenschweißen und
- FIG 4: eine Temperaturverteilung über eine Dampfturbinenwelle im Betrieb.

Einander entsprechende und gleich wirkende Teile sind in den Figuren mit den gleichen Bezugszeichen versehen.

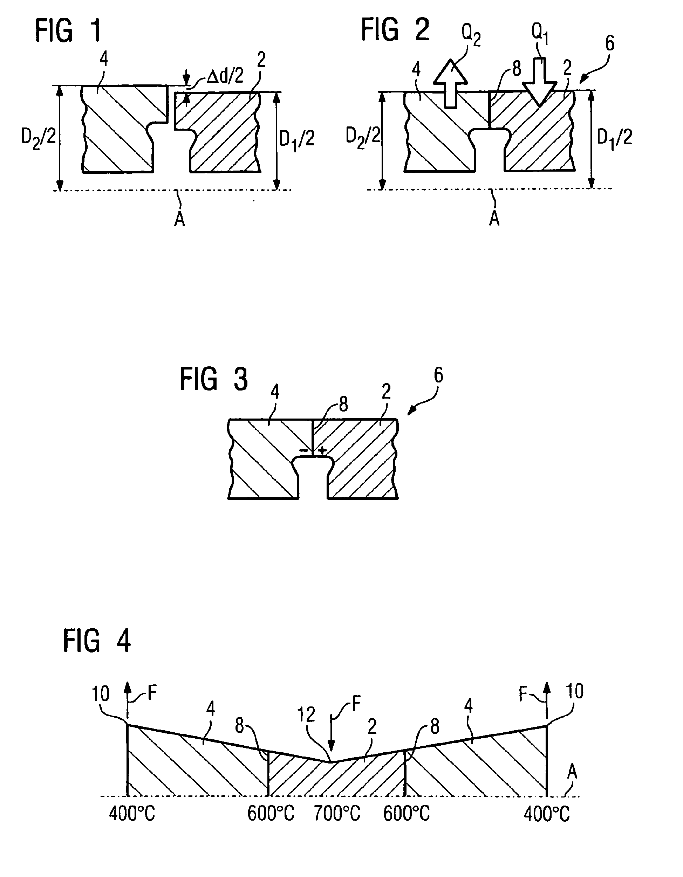

In FIG 1 sind Teile zweier Wellenstücke 2, 4 dargestellt, die zur Bildung einer um eine Drehachse A rotierbaren Dampfturbinenwelle 6 (vgl. FIG 2 bis FIG 5 zusammengefügt werden. Das erste Wellenstück 2 ist aus einer Legierung auf Nickelbasis ausgebildet. Das zweite Wellenstück 4 ist aus einem 10%-Chrom-Stahl ausgebildet. Aufgrund der unterschiedlichen Zusammensetzung beider Wellenstücke 2, 4 weisen sie unterschiedliche Wärmeausdehnungskoeffizienten auf, wobei das erste Wellenstücke 2 einen höheren Wärmeausdehnungskoeffizient als das zweite Wellenstück 4 aufweist.

Jedes der Wellenstücke 2, 4 ist als Vollwelle mit einer im Schweißbereich mittigen Auskammerung ausgebildet, sie weisen aber unterschiedliche Wandstärken bzw. unterschiedliche Außendurchmesser D₁ und D₂ auf. In FIG 1 ist nur die obere Hälfte der rohrförmigen Wellenstücke 2, 4 bzw. nur eine Hälfte der Außendurchmesser D₁, D₂ gezeigt. Der Außendurchmesser D₁ des ersten Wellenstücks 2 ist um Δd kleiner als der Außendurchmesser D₂ des zweiten Wellenstücks 4, wobei Δd in diesem Ausführungsbeispiel etwa 0,1% von D₁ beträgt.

In FIG 2 ist die stoffschlüssige Verbindung 8 zwischen den beiden Wellenstücken 2, 4 dargestellt. Die Verbindung 8 ist in diesem Ausführungsbeispiels eine Schweißverbindung mit einer so genannten I-Naht. Unmittelbar vor oder während der Ausbildung der Schweißverbindung 8 werden beide Wellenstücke 2, 4 einer Wärmebehandlung unterzogen. Hierbei wird das erste Wellenstück 2 erwärmt und ihm wird ein Wärmefluss Q₁ zugeführt. Gleichzeitig wird in diesem Ausführungsbeispiel das zweite Wellenstück 4 gekühlt, wobei ihm ein Wärmefluss Q₂ abgezogen wird. Aufgrund der zugeführten Wärme dehnt sich das erste Wellenstück 2 aus und sein Außendurchmesser D₁ wächst. Zugleich schrumpft das zweite Wellenstück 4 aufgrund der Kälte zusammen. Wenn ein bestimmtes Temperaturniveau erreicht ist, bei dem die Außendurchmesser D₁, D₂ beider Wellenstücke 2, 4 sich entsprechen (D₁=D₂), werden beide Wellenstücke 2, 4 zusammengeschweißt.

Die Dampfturbinenwelle 6 ist in FIG 3 in einem abgekühlten Zustand (abgekühlt bezogen auf die Wärmebehandlung des ersten Wellenstücks 2) bei Raumtemperatur nach dem Zusammenschweißen gezeigt. In diesem Zustand weisen beide Wellenstücke 2, 4 den gleichen Außendurchmesser auf, was zum Auftreten von Vorspannungen auf beiden Seiten der Verbindung 8 führt. An der Seite des ersten Wellenstücks 2 entstehen Zugspannungen, welche mit einem "+"-Zeichen angedeutet sind. Entsprechend entstehen an der Seite des zweiten Wellenstücks 4 Druckspannungen, angegeben durch ein "-"-Zeichen.

Im Betrieb der Welle 6 wird sie mit einer Temperatur im Bereich zwischen etwa 400° und 700° beaufschlagt, welche eine Ausdehnung beider Wellenteile 2, 4 hervorruft. Infolge der unterschiedlichen Wärmeausdehnungskoeffizienten dehnt sich das Nickelbasis-Wellenstück 2 stärker aus als das 10%-Chrom-Wellenstück 4. Im Normalfall führt das zu Druckspannungen, welche an der Seite des ersten Wellenstücks 2 in der Welle auftreten. Auf der anderen Seite der Verbindung 8 treten folglich Zugspannungen auf.

Ein Schnitt in Längsrichtung entlang der Drehachse A der Dampfturbinenwelle 6, der die obere Hälfte der Welle 6 zeigt, ist aus FIG 4 zu entnehmen. An ihren beiden Enden 10 weist die Welle 6 den größten Durchmesser auf und verjüngt sich in Richtung zu ihrem mittleren Bereich 12. Der mittlere Bereich 12 der Welle 6 liegt bei dieser Ausführung im Einströmbereich des heißen Frischdampfs F und ist deshalb einer Temperatur von etwa 700°C ausgesetzt. In Richtung zu beiden Enden 10 der Welle 6 sinkt die Temperatur des Frischdampfs F graduell. Die Temperatur mit der das Wellenmaterial im Ausströmbereich bei den Enden 10 beaufschlagt ist, liegt bei ca. 400°C.

Die Welle 6 setzt sich aus drei Wellenstücken 2, 4 zusammen. Der mittlere Bereich 12 ist aus dem Nickelbasis-Wellenstück 2 gebildet, dessen Material langfristig einer Temperatur von 700°C standhalten kann. Die zwei kühleren äußeren Bereiche der Welle 6 sind aus einem 10%-Chrom-Stahl ausgebildet und entsprechen dem zweiten Wellenstück 4.

Dank der Wärmebehandlung vor dem Zusammenschweißen der drei Wellenstücke 2, 4 sind die Spannungen auf beiden Seiten der Verbindungen 8 bei einer vorgegebenen Betriebstemperatur aufgehoben. Dadurch wird ermöglicht, dass die Verbindungsbereiche 8 in einem Wellenbereich gelegt werden, in dem sie im Betrieb einer höheren Temperatur ausgesetzt sind als bei den herkömmlichen Wellen. In diesem Ausführungsbeispiel sind die Verbindungsbereiche 8 im Betrieb einer Temperatur von ungefähr 600° ausgesetzt. Dadurch wird der mittlere Bereich 12, der aus der teureren Nickelbasislegierung besteht, kürzer ausgebildet, was zu erheblichen Kostenersparnisse führt.

## Patentansprüche

1. Verfahren zur Herstellung einer stoffschlüssigen Verbindung (8) zwischen zwei metallischen Wellenstücken (2, 4) einer Welle (6), insbesondere einer Dampfturbinenwelle, wobei ein erstes Wellenstück (2) einen höheren Wärmeausdehnungskoeffizient und ein zweites Wellenstück (4) einen niedrigeren Wärmeausdehnungskoeffizient aufweist,
wobei mindestens eines der Wellenstücke (2, 4) während der Ausbildung der stoffschlüssigen Verbindung (8) einer Wärmebehandlung unterzogen wird, derart, dass im Verbindungsbereich in einem kalten Zustand der Welle (6) thermische Spannungen eingestellt werden, die bei einer Erwärmung der Welle (6) reduziert werden,
**dadurch gekennzeichnet, dass**
das erste Wellenstück (2) mit einem kleineren Außendurchmesser (D₁) als das zweite Wellenstück (4) gefertigt ist, wobei während der Wärmebehandlung sein Außendurchmesser (D₁)an den Außendurchmesser (D₂) des zweiten Wellenstücks (4) angeglichen wird.

2. Verfahren nach Anspruch 1,
**dadurch gekennzeichnet, dass**
in einem kalten Zustand der Welle (6) im Verbindungsbereich zwischen den beiden Wellenstücken (2, 4) thermische Spannungen bestehen, die infolge der Wärmebehandlung derart eingestellt werden, dass sie bei einer vorgegebenen Betriebstemperatur der Welle (6) zumindest weitgehend aufgehoben sind.

3. Verfahren nach Anspruch 1,
**dadurch gekennzeichnet, dass**
in einem kalten Zustand der Welle (6) im Verbindungsbereich zwischen den beiden Wellenstücken (2, 4) thermische Spannungen bestehen, die infolge der Wärmebehandlung derart eingestellt werden, dass das zweite Wellenstück bei einer vorgegebenen Betriebstemperatur der Welle (6) einer definierten Druckspannung ausgesetzt sind.

4. Verfahren nach Anspruch 1,2 oder 3,
**dadurch gekennzeichnet, dass**
das erste Wellenstück (2) während der Wärmebehandlung erwärmt wird.

5. Verfahren nach einem der vorhergehenden Ansprüche,
**dadurch gekennzeichnet, dass**
das zweite Wellenstück (4) während der Wärmebehandlung abgekühlt wird.

6. Verfahren nach einem der vorhergehenden Ansprüche,
**dadurch gekennzeichnet, dass**
beide Wellenstücke (2, 4) zur Ausbildung der stoffschlüssigen Verbindung (8) zusammengeschweißt werden.

7. Verfahren nach Anspruch 1,
**dadurch gekennzeichnet, dass**
der Außendurchmesser (D₁) des ersten Wellenstücks (2) bei der Wärmebehandlung etwa 0,05% bis etwa 0,3% vergrößert wird.

## Claims

1. Method for making a materially integral connection (8) between two metallic shaft pieces (2, 4) of a shaft (6), in particular of a steam turbine shaft, a first shaft piece (2) having a higher coefficient of thermal expansion and a second shaft piece (4) having a lower coefficient of thermal expansion, at least one of the shaft pieces (2, 4) being subjected to heat treatment during the execution of the materially integral connection (8), in such a way as to establish in the connection region, in a cold state of the shaft (6), thermal stresses which are reduced in the event of a heating of the shaft (6), **characterized in that** the first shaft piece (2) is manufactured with a smaller outside diameter (D₁) than the second shaft piece (4), its outside diameter (D₁) being matched to the outside diameter (D₂) of the second shaft piece (4) during the heat treatment.

2. Method according to Claim 1, **characterized in that** thermal stresses are present in the connection region between the two shaft pieces (2, 4), in a cold state of the shaft (6), and are established as a result of the heat treatment in such a way that they are at least largely cancelled at a predetermined operating temperature of the shaft (6).

3. Method according to Claim 1, **characterized in that** thermal stresses are present in the connection region between the two shaft pieces (2, 4), in a cold state of the shaft (6), and are established as a result of the heat treatment in such a way that the second shaft piece is exposed to a defined compressive stress at a predetermined operating temperature of the shaft (6).

4. Method according to Claim 1, 2 or 3, **characterized in that** the first shaft piece (2) is heated during the heat treatment.

5. Method according to one of the preceding claims, **characterized in that** the second shaft piece (4) is cooled during the heat treatment.

6. Method according to one of the preceding claims, **characterized in that** the two shaft pieces (2, 4) are welded together in order to execute the materially integral connection (8).

7. Method according to Claim 1, **characterized in that** the outside diameter (D₁) of the first shaft piece (2) is enlarged about 0.05% to about 0.3% during the heat treatment.

## Revendications

1. Procédé de production d'une liaison ( 8 ) à complémentarité de matière entre deux pièces ( 2, 4 ) métalliques d'un arbre ( 6 ), notamment d'un arbre de turbine a vapeur, dans lequel une première pièce ( 2 ) d'arbre à un coefficient de dilatation thermique plus grand et une deuxième pièce ( 4 ) d'arbre a un coefficient de dilatation thermique plus petit, dans lequel on soumet à un traitement thermique au moins l'une des pièces ( 2, 4 ) d'arbre pendant la constitution de la liaison ( 8 ) à complémentarité de matière de manière à établir, dans la partie de liaison alors que l'arbre ( 6 ) est à l'état froid, des tensions thermiques qui sont réduites lors d'un réchauffement de l'arbre ( 6 ),
**caractérisé en ce que,**
on fabrique la première pièce ( 6 ) d'arbre en lui donnant un diamètre ( D1 ) extérieur plus petit que celui de la deuxième pièce ( 4 ) d'arbre, en adaptant pendant le traitement thermique, son diamètre ( D1 ) extérieur au diamètre ( D2 ) extérieur de la deuxième pièce ( 4 ) d'arbre.

2. Procédé suivant la revendication 1,
**caractérisé en ce que,**
lorsque l'arbre ( 6 ) est à l'état froid, il y a dans la partie de liaison entre les deux pièces ( 2, 4 ) d'arbre, des tensions thermiques qui s'établissent à la suite du traitement thermique de manière à être supprimées, au moins dans une grande mesure à une température de fonctionnement prescrite de l'arbre ( 6 ).

3. Procédé suivant la revendication 1,
**caractérisé en ce que,**
lorsque l'arbre ( 6 ) est à l'état froid, il y a dans la partie de liaison entre les deux pièces ( 2, 4 ) d'arbre des tensions thermiques qui s'établissement à la suite du traitement thermique de manière à ce que la deuxième pièce d'arbre soit soumise a une contrainte de pression définie à une température de fonctionnement très prescrite de l'arbre ( 6 ).

4. Procédé suivant l'une des revendications 1, 2 ou 3,
**caractérisé en ce que,**
on réchauffe la première pièce ( 2 ) d'arbre pendant le traitement thermique.

5. Procédé suivant l'une des revendications précédentes,
**caractérisé en ce que,**
on refroidit la deuxième pièce ( 4 ) d'arbre pendant le traitement thermique.

6. Procédé suivant l'une des revendications précédentes,
**caractérisé en ce que,**
on soude ensemble les deux pièces ( 2, 4 ) d'arbre pour constituer la liaison ( 8 ) à complémentarité de matière.

7. Procédé suivant la revendication 6,
**caractérisé en ce que,**
on augmente d'environ 0,05% à environ 0,3% le diamètre ( D1 ) extérieur de la première pièce ( 2 ) d'arbre lors du traitement thermique.
